# EUROPÄISCHE PATENTSCHRIFT

(11) **EP 1 884 152 B1**
(45) Veröffentlichungstag und Bekanntmachung des Hinweises auf die Patenterteilung: **08.02.2012**
(21) Anmeldenummer: 07014746.7
(22) Anmeldetag: 27.07.2007
(51) Int. Cl.: A01C 7/04, A01C 7/08

(54) **Einzelkornsämaschine**
Single grain seeder
Semoir monograine

(30) Priorität: 05.08.2006 DE 102006036740
(43) Veröffentlichungstag der Anmeldung: 06.02.2008
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE); Johannaber, Stefan Jan, 49536 Lienen (DE); Götzen, Nils, 49078 Osnabrück (DE)

(56) Entgegenhaltungen:
- EP-A- 0 216 057
- EP-A- 0 376 018
- DE-A1- 2 951 429
- FR-A- 2 697 130
- FR-A- 2 729 271

## Beschreibung

Die Erfindung betrifft eine pneumatische Einzelkornsämaschine gemäß des Oberbegriffes des Patentanspruches 1.

Eine pneumatische Einzelkornsämaschine ist beispielsweise durch die EP 02 16 057 A1 bekannt. Mittels Saatgutablösevorrichtungen lassen sich von einzelnen Perforationsreihen die Samenkörner von den Perforationen ablösen, so dass einzelne Perforationsreihen zum Anlegen von Fahrgassen ausgeblendet werden können. Die zum Anlegen der Fahrgassen von den Perforationen abgelösten Samenkörner fallen in den Saatgutvorrat zurück. Hierdurch verringert sich die Anzahl der pro Flächeneinheit auflaufenden Pflanzen erheblich, was zu einer Reduzierung des möglichen Ernteertrages führt.

Durch die EP 03 76 018 B1 ist eine pneumatische Sämaschine mit einem zentralen Dosierorgan und einem Verteilerkopf, der die von dem zentralen Dosierorgan dosierten Samenkörner auf die einzelnen zu Säscharen führenden Abgänge des Verteilerkopfes aufteilt, bekannt geworden. Einzelne von dem Verteilerkopf abgehenden Saatleitungen sind Umlenkeinrichtungen zugeordnet, mittels welcher beim Absperren der Saatgutzufuhr zu den zu den Fahrgassenscharen führenden Saatleitungen das den Fahrgassensäscharen zudosierte Saatgut in die Saatleitungen der unmittelbaren Nachbarsäschare umgeleitet wird. Hierdurch wird den der Fahrgasse benachbarten Säscharen eine erhöhte Anzahl von Samenkörnern gegenüber den übrigen Saatreihen zugeleitet. Auch diese Pflanzen, die in einem engeren Abstand zueinander gesät sind, können sich gut entwickeln; dies ist darin begründet, dass aus dem breiteren von der Fahrgasse herrührenden Standraum ein ausreichend großes Angebot an Wachstumsfaktoren von den Pflanzen entschieden besser genutzt werden kann. Eine Einzelkornsämaschine gemäß dem Oberbegriff von Anspruch 1 ist aus FR 2 729 271 bekannt.

Der Erfindung liegt die Aufgabe zugrunde, bei einer Einzelkornsämaschine die den Fahrgassen unmittelbar benachbarten Saatreihen mit einer erhöhten Aussaatstärke, d.h. mit einem engeren Abstand der einzelnen Samenkörner zueinander, auszusäen.

Diese Aufgabe wird erfindungsgemäß durch die kennzeichnenden Merkmale des Patentanspruches 1 gelöst. Infolge dieser Maßnahmen können den zu den Ablageeinrichtungen, die unmittelbar der Fahrgasse benachbart sind, die Samenkörner in einer engeren Reihenfolge zugeleitet werden, so dass in den Saatreihen neben der Fahrgasse eine erhöhte Anzahl von Samenkörnern, in einem engeren Abstand als dem übrigen Bereich, zugeleitet werden. Somit wird also eine einfache Fahrgassenschaltung für eine Einzelkornsämaschine vorgeschlagen, wobei eine Ertragsoptimierung erreicht wird.

Die Umstellung auf Normalabstand und engeren Saatkornablageabstand für die die Fahrgassen benachbarten Reihen ist dadurch verwirklicht, dass jeder Perforationsreihe eine verschiebbar angeordnete Saatgutablösevorrichtung zugeordnet ist, dass die Saatgutablösevorrichtungen derart verschiebbar sind, dass wahlweise die den Perforationen einer oder beiden Perforationsreihen der Vereinzelungseinheit anhaftenden Samenkörner von diesen Perforationen vollständig abweisbar sind.

In einfacher Weise lassen sich die Saatgutablöseelemente für die jeweilige Position in einfacher Weise dadurch einstellen, dass den Saatgutablösevorrichtungen diese verschiebende und einstellbare motorische Stellelemente zugeordnet sind.

Um die Fahrgassen in der richtigen Reihenfolge anzulegen und die Saatgutablöseelemente jeweils in die richtige Stellung zum Anlegen der Fahrgassen bzw. beim Nichtanlegen von Fahrgassen zu bringen, ist vorgesehen, dass die motorischen Stellelemente von einem Bordcomputer ansteuerbar sind.

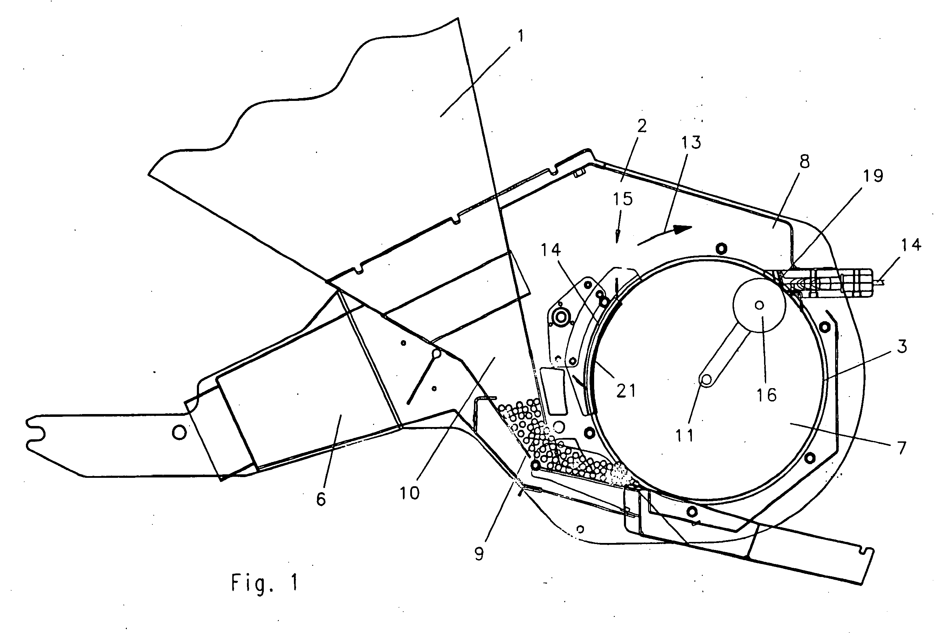

Weitere Einzelheiten der Erfindung sind der Beispielsbeschreibung und den Zeichnungen zu entnehmen. Hierbei zeigen
- Fig. 1: die Vereinzelungsvorrichtung der Einzelkornsämaschine in vereinfachter ausschnittsweiser Darstellung in Seitenansicht,
- Fig. 2: die Vereinzelungsvorrichtung in der Draufsicht,
- Fig. 3: den Ausschnitt eines Feldes mit in Säreihen abgelegten Samenkörnern in Prinzipdarstellung,
- Fig. 4: die schematische Darstellung der Vereinzelung der Samenkörner durch die Perforationsreihen mit zugeordnetem Saatgutablöseelement und der Zuordnung der Ablage der Samenkörner in Saatreihen ohne Anlegung einer Fahrgasse in Prinzipdarstellung und
- Fig. 5: die schematische Darstellung der Vereinzelung der Samenkörner durch die Perforationsreihen mit zugeordnetem Saatgutablöseelement und der Zuordnung der Ablage der Samenkörner in Saatreihen mit Anlegung einer Fahrgasse in Prinzipdarstellung.

Die Sämaschine weist den Vorratsbehälter 1 und die unterhalb des Vorratsbehälters 1 in einem Gehäuse 2 drehbar angeordnete und rotierend angetriebene Vereinzelungstrommel 3 auf. In der Umfangsfläche der Vereinzelungstrommel 3 sind in kreisförmig umlaufenden Perforationsreihen 4 und 4' die Perforationen 5 angeordnet. Der Vorratsbehälter 1 und das Gehäuse 2 oberhalb der Trommel 3 sind zumindest annähernd druckdicht mittels eines nicht dargestellten Deckels verschlossen. Über den Luftanschlusskasten 6 ist der Vorratsbehälter 1 und das Gehäuse 2 oberhalb der Trommel 3 durch das an den Anschlusskasten 6 angeschlossene und nicht dargestellte Druckluftgebläse mit Druckluft beaufschlagbar, so dass die Perforationsreihen 4 mit einer Druckdifferenz zwischen dem Innenraum 7 der Vereinzelungstrommel 3 und dem Außenbereich 8 der Vereinzelungstrommel 3 beaufschlagt werden. Aufgrund dieser Druckdifferenz lagern sich an den Perforationen 5 der Perforationsreihen 4 der Vereinzelungstrommel 3, wenn diese durch den Saatgutvorrat 9, der sich aufgrund der Führung des Saatgutschachtes 10 bis unterhalb der Drehachse 11 der Trommel 3 erstreckt, Samenkörner an. Der Saatgutvorratsbehälter 1 bzw. das Gehäuse 2 unterhalb des Saatgutvorratsbehälters 1, in dem die Vereinzelungstrommel 3 drehend und abdichtend gelagert ist, weist die voneinander beabstandeten Seitenwände 12 auf, die sich parallel zur Bewegungsrichtung 13 der Trommel 3 erstrecken und mit der Trommel 3 zumindest annähernd abdichtend zusammenwirken.

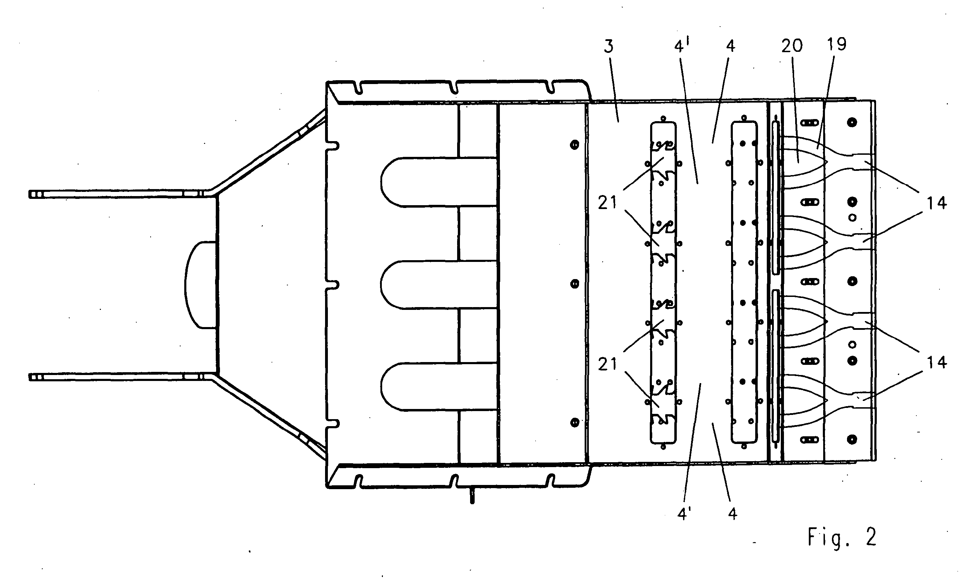

Den Perforationsreihen 4 und 4' sind zu als nicht dargestellten Säscharen ausgebildeten Ablagevorrichtungen führende Ausbringleitungen 14 zugeordnet. Die Säschare legen die Samenkörner 15 in Säreihen 16 ab. Hierbei sind jeder Ausbringleitung 14 zwei Perforationsreihen 4, 4', die jeweils eine Vereinzelungseinheit 17 bilden, zugeordnet. Hierzu weisen die Eingangsbereiche 18 der Ausbringleitungen 14 im Bereich der Perforationen 5 der Perforationsreihen 4, 4' einen Eingangstrichter 19 auf. Im Eingangsbereich 18 der Eingangstrichter 19 ist ein in die Eingangstrichter 19 in ein Y- oder hosenartiges Leitungselement aufteilendes Wandstück 20 angeordnet, wie in Fig. 2 ersichtlich ist. Die Perforationen 5 in den benachbarten Perforationsreihen 4, 4', die eine Vereinzelungseinheit 17 bilden und einer Ausbringleitung 14 zugeordnet sind, sind in der Perforationsreihe 4' in einem engeren Abstand zueinander als in der anderen Perforationsreihe 4 angeordnet.

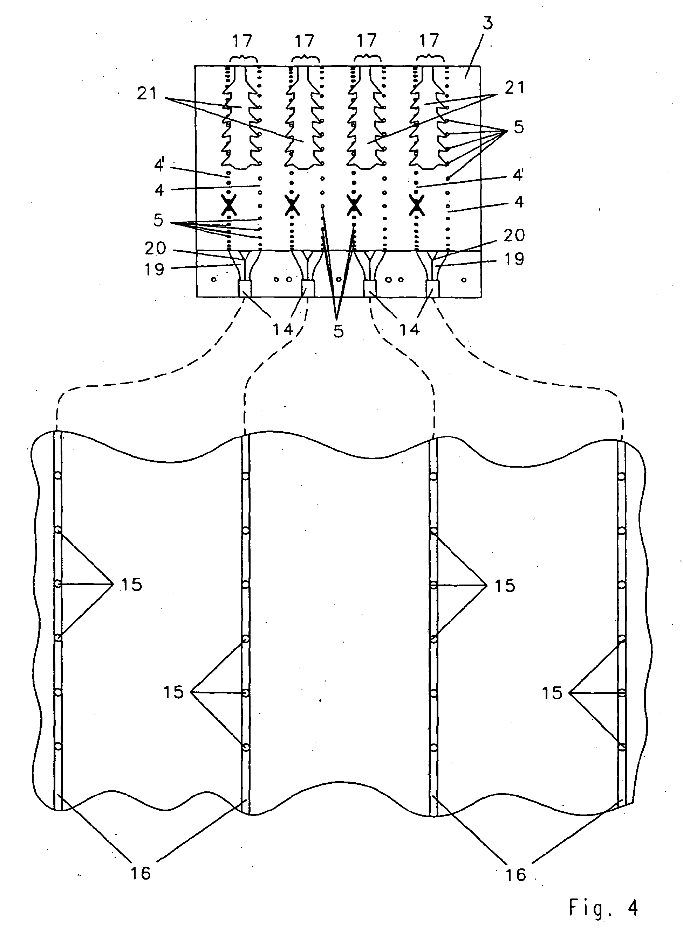

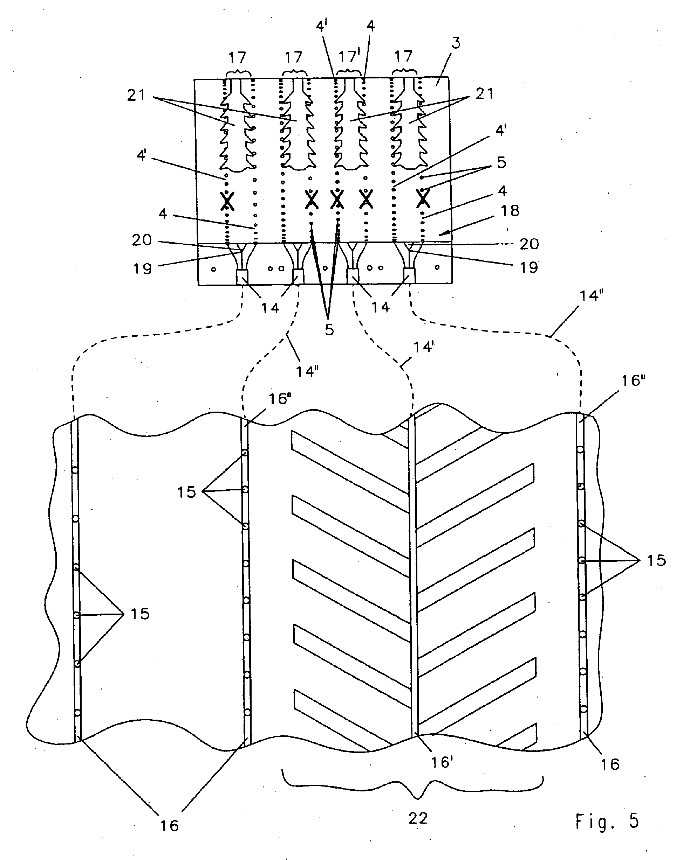

Den Perforationen 5 der Perforationsreihen 4, 4' sind als Abstreifer und Saatgutablösevorrichtungen wirkende Abstreifvorrichtungen 21 zugeordnet. Diese Abstreifvorrichtungen 21 sind so einstellbar, dass sie einerseits auf der einen Seiten als Abstreifer für zuviel an den Perforationen 5 anhaftenden Samenkörnern wirken, so dass nur ein Samenkorn an jeder Perforation 5 haften bleibt und andererseits von den Perforationen 5 der anderen Perforationsreihe oder der beiden Perforationsreihen der gleichen Vereinzelungseinheit 17 sämtliche Samenkörner ablösen, so dass über diese Perforationsreihen 4, 4' keine Samenkörner der Ausbringleitung 14 zugeleitet werden. In den Fig. 4 und 5 sind die Perforationsreihen 4 und 4' jeweils mit einem X gekennzeichnet, bei denen die Abstreifvorrichtung 21 sämtliche Saatkörner ablöst. Die jeder Vereinzelungseinheit 17 der Perforationsreihen 4, 4' zugeordnete der Abstreifervorrichtung 21 ist verschiebbar angeordnet, so dass wahlweise die Samenkörner über die Perforationsreihe 4'mit den enger zueinander angeordneten Perforationen 5 oder über die Perforationsreihe 4 mit den in einem größeren Abstand zueinander angeordneten Perforationen 5 der Ausbringleitung 14 zugeführt werden.

Weiterhin können die als Saatgutablösevorrichtungen 21 ausgebildeten Abstreifervorrichtung so eingestellt werden, dass von den Perforationen 5 beider Perforationsreihen 4 und 4' sämtliche Samenkörner vollständig abweisbar sind und so der Ausbringleitung 14 keine Saatkörner zugeführt werden, um so Fahrgassen 22 anzulegen oder die Arbeitsbreite der Maschine zu reduzieren. Somit sind die jeder Perforationsreihe 4, 4' zugeordneten Saatgutablösevorrichtungen 21 verschiebbar angeordnet und zwar derart, dass die Abstreifvorrichtungen 21 derart verschiebbar sind, dass wahlweise die den Perforationen 5 einer oder beiden Perforationsreihen 4, 4' der Vereinzelungseinheit 17 anhaftenden Samenkörner von diesen Perforationen 5 vollständig abweisbar sind. Zur Verschiebung und Einstellung der Abstreifvorrichtung 21 sind diesen nicht dargestellte verschiebende und einstellbare motorische Stellelemente zugeordnet, die von einem Bordcomputer ansteuerbar sind, um so im richtigen Rhythmus die Fahrgassen 22 anzulegen.

Die Funktionsweisen der Einzelkornsämaschine mit der als Saatgutablösevorrichtung ausgebildeten Abstreifervorrichtung 21 ist folgende:
Gemäß der Einstellung nach Fig. 4 sind die Abstreifervorrichtungen 21 so eingestellt, dass von den Perforationen 5 der Perforationsreihen 4 die Samenkörner mit einem normalen Abstand vereinzelt werden und im entsprechendem Abstand in Saatreihen 16 abgelegt werden, während die Samenkörner vollständig von den Perforationen 5 der Perforationsreihen 4' durch die Abstreifvorrichtungen 21 abgelöst werden und in den Saatgutvorrat zurück fallen. Die Abstreifervorrichtung 21 streifen bei den Perforationen 5 der Perforationsreihen 4 lediglich die überflüssigen Saatkörner von den Perforationen 5 ab, so dass nur ein Saatkorn an jeder Perforation 5 haften bleibt.

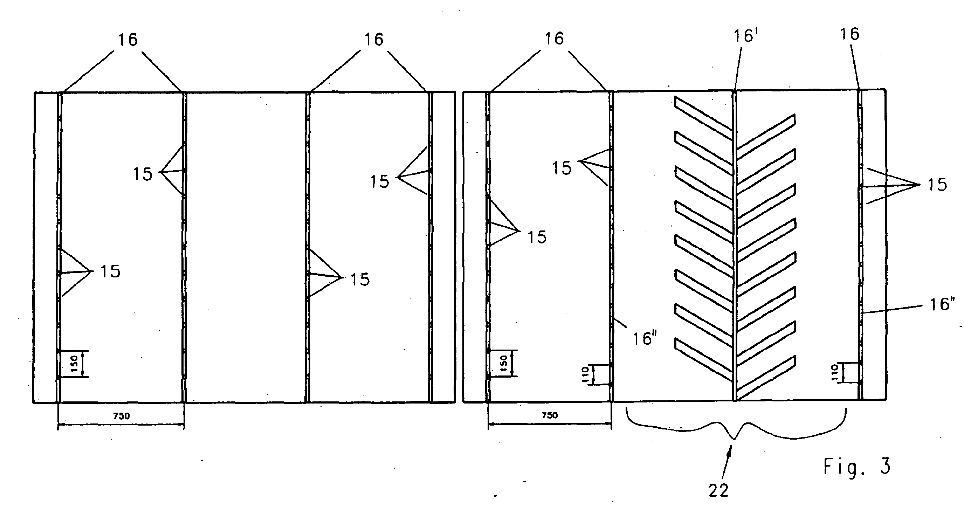

Wenn eine Fahrgasse 22 angelegt wird, wie in Fig. 5 und in dem rechten Abschnitt in der Fig. 3 dargestellt ist, d.h. also eine Ausbringleitung 14, in diesem Fall die Leitung 14' abgesperrt wird bzw. dieser Ausbringleitung 14 keine Samenkörner zugeleitet wird, wird die zugehörige Abstreifvorrichtung 21 zu der Vereinzelungseinheit 17 die der Ausbringleitung 14', die der Fahrgasse 22 zugeordnet ist, so eingestellt, dass die Abstreifvorrichtung 21 von den Perforationen 5 beider Perforationsreihen 4, 4', wie durch die Kreuze X in Fig. 5 symbolisiert ist, sämtlich Saatkörner abgelöst werden, so dass der Ausbringleitung 14', die der anzulegenden Fahrgasse 22 zugeordnet ist, keine Samenkörner ausgebracht werden. Somit werden in der Säreihe 16' keine Saatkörner abgelegt. Gleichzeitig werden die Abstreifvorrichtungen 21 für die der Fahrgasse 22 benachbarten Ausbringleitungen 14" zugeordneten Vereinzelungseinheit 17' so eingestellt, dass die Saatkörner von den Perforationen 5 der Perforationsreihe 4, in den die Perforationen 5 mit einem weiteren Abstand als in der zugehörigen Perforationsreihe 4' der Vereinzelungseinheit 17', bei der die Perforationen 5 in einem engeren Abstand zueinander angeordnet sind, abgestreift, so dass die Samenkörner 15 in einem engeren Abstand zueinander in der Saatreihe 16' abgelegt wird, wie Fig. 3 und 5 zeigen. In der der Fahrgasse 22 benachbarten Saatreihe 16" werden die Saatkörner-15 beispielsweise mit einem Abstand von 110 mm zueinander und in den übrigen weiter entfernt liegenden Säreihen 16 mit einem Abstand von 150 mm zueinander abgelegt. Dies bedeutet also, dass die Samenkörner in einer größeren Saatdichte in der der Fahrgasse 22 benachbarten Säreihe 16" im Gegensatz zu den übrigen Säreihen 16 auf dem zu bestellenden Feld angelegt werden.

## Patentansprüche

1. Pneumatische Einzelkornsämaschine mit einem Saatgutvorratsbehälter und zumindest einer drehbar angeordneten Vereinzelungstrommel, in deren Umfangsfläche kreisförmig angeordnete Perforationsreihen angebracht sind, einem Gebläse, mit welchem eine Druckdifferenz zwischen dem Innenraum der Vereinzelungstrommel und dem Außenbereich der Vereinzelungstrommel erzeugbar ist, so dass, wenn die Vereinzelungstrommel durch den Saatgutvorrat geführt wird, sich an den Perforationen der perforierten Trommel Samenkörner anlagern, wobei von den Perforationslöchern der Trommel zur Ablageeinrichtung führende Ausbringleitungen vorgesehen sind, wobei den Perforationen der Perforationsreihen Saatgutablösevorrichtung angeordnet sind, wobei zumindest einigen der Ausbringleitungen (14) zwei Perforationsreihen (4, 4'), die eine Vereinzelungseinheit (17) bilden, zugeordnet sind, **dadurch gekennzeichnet, dass** die Perforationen (5) in den beiden einer Ausbringleitung (14) zugeordneten Perforationen (5) in der einen Perforationsreihe (4') in einem engeren Abstand zueinander als in der anderen Perforationsreihe (4) angeordnet sind, dass jeder Perforationsreihe (4, 4')eine verschiebbar angeordnete Saatgutablösevorrichtung (21) zugeordnet ist, dass die Saatgutablösevorrichtungen (21) derart verschiebbar sind, dass wahlweise die den Perforationen (5) einer oder beiden Perforationsreihen (4, 4') der Vereinzelungseinheit (17) anhaftenden Samenkörner von diesen Perforationen (5) vollständig abweisbar sind.

2. Einzelkornsämaschine nach Anspruch 1, **dadurch gekennzeichnet, dass** die Saatgutablösevorrichtung (21) diese verschiebende und einstellbare motorische Stellelemente zugeordnet sind.

3. Einzelkornsämaschine nach Anspruch 2, **dadurch gekennzeichnet, dass** die motorischen Stellelemente von einem Bordcomputer ansteuerbar sind.

## Claims

1. Pneumatic single grain seed drill, having a seed storage container and at least one rotatably arranged singling drum, in the circumferential surface of which there are provided rows of perforations that are arranged in a circular manner, and having a fan, by way of which a pressure difference between the interior of the singling drum and the exterior region of the singling drum can be created, so that, when the singling drum is guided through the seed store, grains are taken up at the perforations in the perforated drum, wherein dispensing lines that lead from the perforation holes in the drum to the depositing device are provided, wherein seed detaching arrangements are arranged at the perforations of the rows of perforations, wherein two rows (4, 4') of perforations, which form a singling unit (17), are assigned to at least some of the dispensing lines (14), **characterized in that** the perforations (5) in the two perforations (5) assigned to a dispensing line (14) are arranged closer together in one row (4') of perforations than in the other row (4) of perforations, **in that** a displaceably arranged seed detaching arrangement (21) is assigned to each row (4, 4') of perforations, **in that** the seed detaching arrangements (21) are displaceable such that optionally the grains adhering to the perforations (5) of one or the two rows (4, 4') of perforations of the singling unit (17) can be completely repelled from these perforations (5).

2. Single grain seed drill according to Claim 1, **characterized in that** settable motor-driven actuator elements which displace the seed detaching arrangement (21) are assigned to the latter.

3. Single grain seed drill according to Claim 2, **characterized in that** the motor-driven actuator elements can be activated by an on-board computer.

## Revendications

1. Semoir pneumatique monograine comportant un réservoir de semences et au moins un tambour séparateur monté à rotation, dont la surface périphérique comporte des rangées circulaires de perforations, une machine soufflante qui créée une différence de pression entre le volume intérieur du tambour séparateur et sa zone extérieure de façon que lorsque le tambour séparateur passe dans la réserve de graines de semences, des graines se fixent sur les perforations du tambour semoir dans lequel :
* des conduites distributrices relient les perforations du tambour à l'installation de dépose,
* des dispositifs de décrochage de graines de semences sont prévus pour les perforations des rangées de perforations,
* au moins certaines des conduites de distribution (14) sont associées à deux rangées de perforations (4, 4') constituant une unité de séparation (17),
**caractérisé en ce que**
- les perforations (5) parmi les perforations (5) associées à une conduite distributrice (14) dans l'une des rangées de perforations (4') ont un écartement plus réduit que dans l'autre rangé de perforations (4),
- un dispositif de décrochage de semences (21) coulissant étant associé à chaque rangée de perforations (4, 4'),
- les dispositifs de décrochage de semences (21) sont coulissants de façon à pouvoir détacher complètement, sélectivement les graines de semences accrochées aux perforations (5) de l'une ou de l'autre des deux rangées de perforations (4, 4') de l'unité de séparation (17).

2. Semoir pneumatiques monograine selon la revendication 1,
**caractérisé en ce que**
le dispositif de décrochage de graines de semences (21) comporte des éléments d'actionnement motorisés, différents, réglables.

3. Semoir pneumatique monograine selon la revendication 2,
**caractérisé en ce que**
les éléments d'actionnement motorisés sont commandés par un ordinateur de bord.
